# EUROPEAN PATENT SPECIFICATION

(11) **EP 0 618 536 B1**
(45) Date of publication and mention of the grant of the patent: **22.12.1999**
(21) Application number: 94102030.7
(22) Date of filing: 10.02.1994
(51) Int. Cl.: G06F 13/26

(54) **Interrupt arrangement**
Unterbrechungsanordnung
Dispositif d'interruption

(30) Priority: 02.04.1993 GB 9306955
(43) Date of publication of application: 05.10.1994
(73) Proprietor: MOTOROLA, INC., Schaumburg, IL 60196 (US)
(72) Inventor: Huston, William DeWitt, Jr., Austin, Texas 78759 (US); Schwarz, Roland, CH-1202 Geneva (CH); Burgess, Bradley, Austin, Texas 78745 (US)
(74) Representative: Ibbotson, Harold

(56) References cited:
- EP-A- 0 355 856
- EP-A- 0 528 139
- EDN ELECTRICAL DESIGN NEWS vol. 28, no. 26 , December 1983 , NEWTON, MASSACHUSETTS US pages 270 - 272 KLEIN 'FPLA FORMS VME BUS INTERRUPTER'

## Description

### FIELD OF THE INVENTION

This invention relates generally to interrupt arrangements for use with data processing systems.

### BACKGROUND OF THE INVENTION

Conventional internal architecture of data processing systems includes a bus for the transfer of instructions and data between the individual elements of the processing system.

Typically a processor manages the operation of the bus. A peripheral device connected to the bus may have cause to generate an interrupt request by sending a signal on one or more interrupt request (IRQ) line(s) of the bus. For example a timer device may generate an interrupt request when it reaches a certain time. The processor monitors the IRQ line(s) and on detecting a signal it sends out an instruction asking which device sent the signal.

The device in question identifies itself and the interrupt request is serviced by the processor. Often more than one interrupt request may be pending at a time, and so the use of prioritised interrupt techniques allows the organisation of interrupt request priorities between peripherals, ensuring the more urgent requests are dealt with first.

Vectored interrupts are commonly used to enhance the flexibility of interrupt handling. Recent microprocessor system designs have included modules containing more than one interrupt request source.

A problem with this arrangement is that the flexibility of vectored interrupts and interrupt priority methods is lost when used with multiple interrupt request sources.

EP-A-528139 describes a programmable interrupt priority encoder which fields interrupts from devices connected to a bus, and which is adapted to allow more than one device to have the same priority level.

This invention seeks to provide an arrangement of interrupt architecture in which the above mentioned disadvantages have been mitigated.

### SUMMARY OF THE INVENTION

According to the present invention as defined by independent claim 1 there is provided an interrupt arrangement for use in a module coupled to a bus of a data processing system, the system having an interrupt sequence, wherein the module comprises: a plurality of submodules, each submodule including an interrupt request source a control input , and containing priority information about the interrupt request source for determining an order of priority between submodules having active interrupt request sources; a submodule bus having a plurality of lines, and coupled to the control input of each submodule; an interface for coupling to the bus of the data processing system, and coupled to the submodule bus, the interface containing priority information about the arrangement for determining an order of priority between the module and other modules connected to the system bus, the interface also including a control means for providing control signals to the control inputs of the submodules via the submodule bus in response to interrupt signals from the system bus, wherein the interface is arranged to combine the priority information of the highest priority submodule with the priority information of the interface for providing complete priority information for establishing an order of priority between modules having active interrupt request sources, thereby allowing the interrupt request sources of the submodules to be serviced by the interrupt sequence of the system bus.

Therefore the bus can provide interrupt service to the interrupt request sources of the submodules within the interrupt arrangement through the interface and by way of the control signals.

Each submodule may also include memories containing priority information about the interrupt request source of that submodule, for determining an order of priority between submodules having active submodule interrupt request sources.

It will be appreciated that in this way the flexibility of vectored interrupts and interrupt priority methods is maintained when used with multiple submodule interrupt request sources.

### BRIEF DESCRIPTION OF THE DRAWINGS

An exemplary embodiment of the invention will now be described with reference to the accompanying drawings, in which:
FIG.1 shows in block diagram form a preferred embodiment of an interrupt arrangement in accordance with the invention; and,
FIG.2 shows a flow diagram depicting the operation of the preferred embodiment of FIG.1.

### DETAILED DESCRIPTION OF A PREFERRED EMBODIMENT

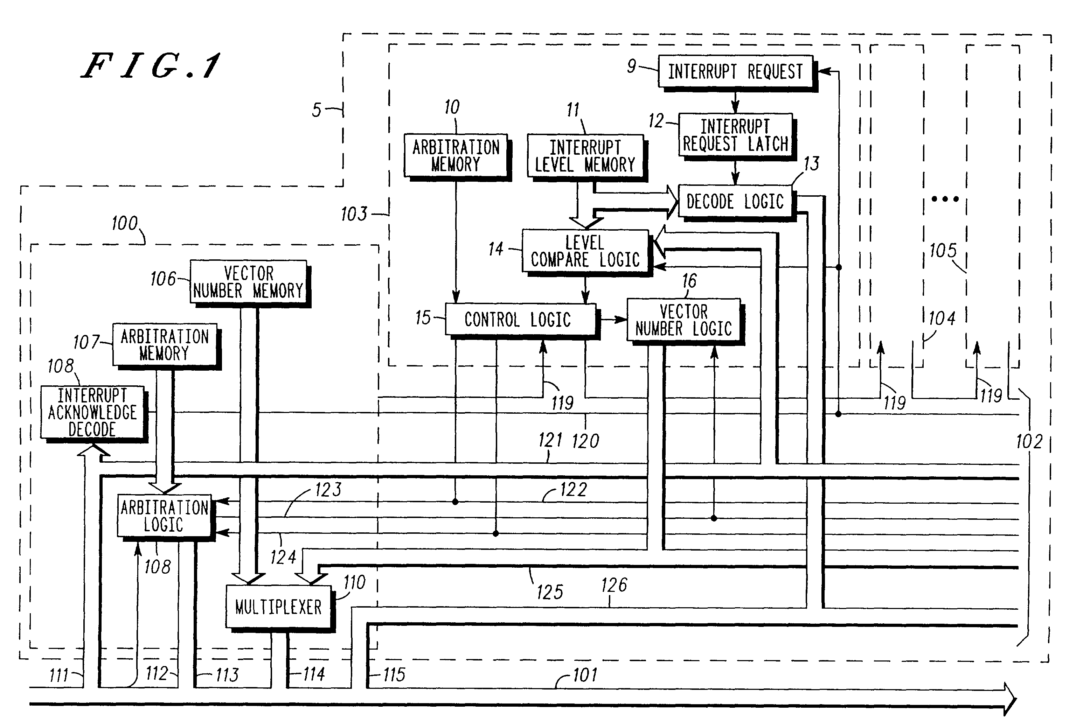

Referring to FIG.1, there is shown an interrupt arrangement incorporated in a module 5. A module interrupt interface 100 of the module 5 is connected to a bus 101 of a processing system, such as a computer. The bus 101 is coupled to a processor and to other modules (not shown) of the processing system. A submodule bus 102 is coupled to the module interrupt interface 100. A plurality of submodules 103, 104, 105 also have connections to the submodule bus 102, such that through the submodule bus 102 and module interrupt interface 100, each submodule 103, 104, 105 can communicate with the bus 101.

The bus 101 includes address and control lines 111, an address strobe (AS) line 112, arbitration (ARB) lines 113, data lines 114 and interrupt request (IRQ) lines 115.

The submodule bus 102 includes an interrupt acknowledge (IACK) line 120, address and control lines 121, an arbitration (ARB) line 122, a vector (VECT) line 123, an ARACK line 124, data lines 125 and interrupt level lines 126.

Referring to the submodule 103, memories are provided for holding priority information about the submodule 103. The priority information includes arbitration information.

A submodule arbitration memory 10 holds the value of the arbitration level for the submodule 103 and a submodule interrupt level memory 11 holds the value of the interrupt priority level for the submodule 103.

A submodule interrupt request latch 12 locks a submodule interrupt request condition 9 for the period of arbitration, in order to prevent a change in condition during the arbitration. A submodule decode logic arrangement 13 is coupled to receive the latched interrupt condition from the submodule interrupt request latch 12, and the interrupt priority level from the submodule interrupt level memory 11.

The interrupt level lines 126 of the submodule bus 102 are coupled to the submodule decode logic arrangement 13 for providing an interrupt request signal thereat. A submodule level compare logic arrangement 14 is also coupled to receive the interrupt priority level value from the submodule interrupt level memory 11 and is also coupled to the IACK line 120 and the address and control lines 121 of the submodule bus 102.

A submodule control logic arrangement 15 is coupled to receive arbitration level values from both the submodule arbitration memory 10 and from the submodule level compare arrangement 14 and is also coupled to the ARB line 122 and the ARACK line 124 of the submodule bus 102. A submodule vector number driver 16 is coupled to receive an input from the submodule control logic arrangement 15 and is also coupled to the data lines 125 and the VECT line 123 of the submodule bus 102.

With reference to the module interrupt interface 100, a module vector number memory 106 is coupled to the data lines 114 of the bus via a module multiplexer 110. The module multiplexer 110 is also coupled to the data lines 125 of the submodule bus 102, such that partial vector number signals from the module vector number memory 106 may be combined within the module multiplexer 110 with partial vector number signals from the data lines 125 of the submodule bus 102 to form complete vector number signals which are suitable for the data lines 114 of the bus 101.

A carry chain 119 connected to the module interrupt interface 100 is coupled to the submodule control logic arrangement 15 of each submodule (103,104,105) in series, for providing an enable/disable signal thereat.

In a similar way a module arbitration memory 107 is coupled to the ARB lines 113 and the AS line 112 of the bus 101 via a module arbitration logic arrangement 109. The module arbitration logic arrangement 109 is also coupled to the ARB line 122, VECT line 123 and ARACK line 124 of the submodule bus 102, such that partial arbitration signals from the module arbitration memory 107 may be combined with partial arbitration signals from the ARB line 122 of the submodule bus 102 within the module arbitration logic arrangement 109 to form complete arbitration signals which are suitable for the ARB lines 113 of the bus 101.

A module interrupt acknowledge decode arrangement 108 is coupled between the IACK line 120 of the submodule bus 102 and the address and control lines 111 of the bus 101, wherein it generates a signal on the IACK line 120 in response to a signal indicating an interrupt acknowledge cycle on the address and control lines 111 of the bus 101. The address and control lines 111 of the bus 101 also have a direct connection to the address and control lines 121 of the submodule bus 102.

The interrupt level lines 126 of the submodule bus 102 are directly connected to the IRQ lines 115 of the bus 101.

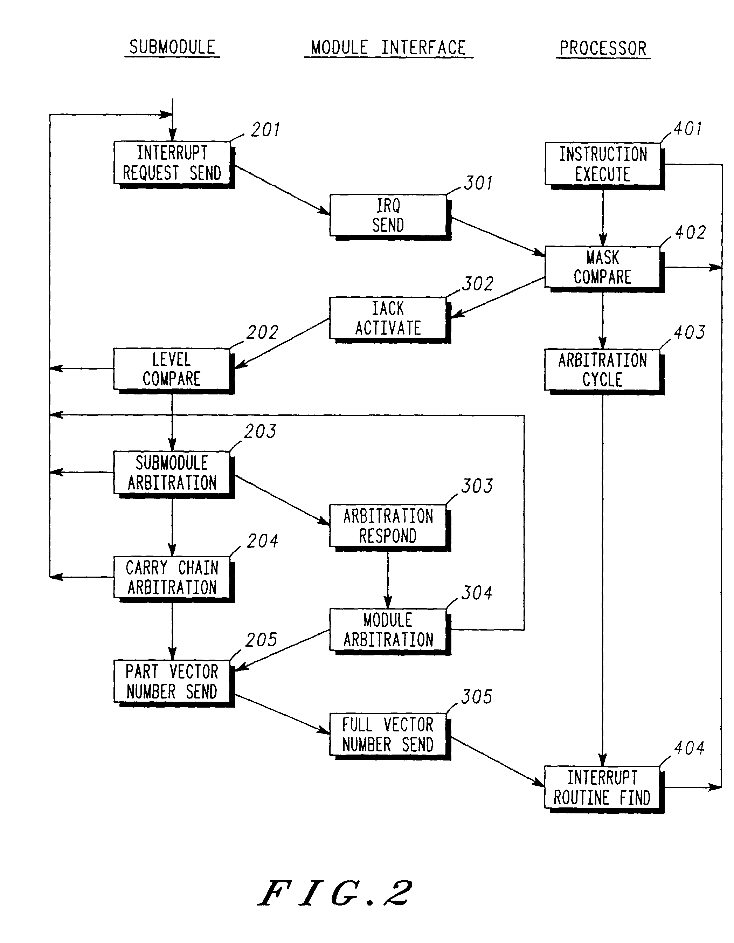

Referring now also to FIG.2, there is shown a flow diagram of a typical interrupt sequence.

At block 201 an interrupt request condition is met within the submodule 103, the submodule interrupt request source 9 generates an interrupt request signal which passes through the submodule interrupt request latch 12 to the submodule decode logic arrangement 13. The submodule interrupt level memory 11 provides a value to the submodule decode logic arrangement 13 to establish thereat whether interrupts are disabled or are enabled for a particular interrupt request priority level.

If the interrupt condition is enabled by the submodule interrupt level memory 11, the submodule decode logic arrangement 13 places the corresponding interrupt request onto the interrupt level lines 126.

Then at block 301 the signal on the interrupt level lines 126 passes through the module interrupt interface 100 directly to the IRQ lines 115 of the bus 101 and on to the processor.

Any number of the interrupt request sources of the submodules may be active at the same time, with different or identical interrupt levels and with different or identical arbitration numbers. Also, any of the other modules coupled to the bus 101 may have one or more active interrupt request sources.

At block 401, the processor works through an instruction of a software program. At the end of the instruction within the program the processor enters block 402 and looks for the highest priority level interrupt request signal on the IRQ lines 115 of the bus 101. The processor performs a comparison between the level of the highest request and an internal interrupt masking level.

If the internal masking level is higher than or equal to the highest interrupt request priority level, the processor proceeds with the next instruction within the program, returning to block 401. All existing interrupt requests remain pending. The processor continues to execute the instructions of the software program, returning to block 402 to perform the comparison at the end of each instruction.

If the highest priority interrupt level request becomes higher than the processor interrupt masking level, then the processor stops its execution of the program, and moves to block 403, where it commences an arbitration cycle to obtain an interrupt vector number from the source of the highest priority interrupt request. The processor provides this arbitration cycle by activating the address and control lines 111 of the bus 101 to inform all modules that it is requesting an interrupt vector number for the highest priority pending interrupt request source.

The processor also provides the interrupt level number that is to be arbitrated. The level being arbitrated is usually shown on the address and control lines 111 of the bus 101, which is not otherwise used during the interrupt acknowledge cycle, but other bus lines could also be used. At this point, the processor enters the block 404 and waits for the interrupt vector number from the submodule interrupt request source, corresponding to the level being serviced.

At block 302 the module interrupt acknowledge decode arrangement 108 monitors the address and control lines 111 of the bus 101 and activates a signal on the IACK line 120 of the submodule bus 102 in response to an interrupt acknowledge signal being detected on the address and control lines 111.

At block 202, the signal on the IACK line 120 of the submodule bus 102 causes the submodule interrupt request latch 12 of each submodule 103, 104, 105 to be locked (non transparent) and the submodule level compare arrangement 14 to compare the value of the submodule interrupt level memory 11 with the level being indicated by the processor on the address and control lines 111 of the bus via the address and control lines 121 of the submodule bus 102.

If the submodule level compare arrangement 14 indicates a negative result to the submodule control logic arrangement 15, the control logic 15 does not participate in the arbitration between submodules, the ARB and ARACK signals are not activated and hence the submodule 103 does not respond to the current interrupt acknowledge cycle, returning to block 201.

If the submodule level compare arrangement 14 indicates a positive result to the submodule control logic arrangement 15, then the submodule 103 moves to block 203, where the submodule control logic arrangement 15 activates the ARACK line 124 to indicate to the interrupt module arbitration logic arrangement 109 that at least one submodule has a positive response to the interrupt acknowledge cycle. All other submodules on the submodule bus 102 with pending interrupt requests are making the same decision at the same time. Thus the ARACK line 124 may be driven simultaneously by more than one submodule, but the interrupt module arbitration logic arrangement 109 only needs to know that one or more submodules wishes to respond, not how many wish to respond.

The submodule control logic arrangement 15 drives the ARACK line 124 and the ARB line 122 of the submodule bus 102 at the same time. The arbitration arrangement 10 provides a suitable signal for so doing. The ARB line 122 is typically a precharge/discharge line, so that several interrupt request sources can activate the same line. The signal on the ARB line 122 derived from the arbitration memory arrangement 10 arrives at the module interrupt interface 100 at the same time as the ARACK signal, where they are concatenated with additional signals from the module arbitration memory 107 to form the complete arbitration number, indicating the highest arbitration level of the active interrupt requests within the module 5.

Then at block 303 the module arbitration logic arrangement 109 sends the complete arbitration number signal on the ARB lines 113 of the bus 101 showing the highest arbitration level of the active interrupts within the module 5. Moving to block 304 the module arbitration logic arrangement 109 then participates with other modules on the bus 101 in the inter-module arbitration process to determine which of them is to respond to the interrupt acknowledge cycle.

On the bus 101, one time slot is devoted to each arbitration number bit. Each participating module drives an arbitration bit, monitors the arbitration bit on the bus 101, compares the monitored bit with what is driven, either withdrawing from the arbitration if the arbitration bit on the bus is different to the value driven, or continuing the arbitration by the same procedure with the next arbitration bit if the values agree. Thus, the module with the highest arbitration number eventually wins the module arbitration and is designated to respond to the interrupt acknowledge cycle.

Also at block 203 arbitration takes place among the submodules to determine which is to respond to the interrupt arbitration cycle. As the control logic 15 drives the value of the submodule arbitration memory 10 onto the ARB line 122, the ARB line 122 is also monitored to see if the value is the same as the value of the arbitration level driven. If the condition of the ARB line 122 is different from the arbitration level of the memory 10, the submodule 103 does not participate further in responding the interrupt arbitration cycle.

If the condition of the ARB line 122 is the same as the arbitration level of the memory 10, the submodule wins the arbitration.

More than one submodule may have an interrupt request pending with the same interrupt level and the same arbitration value. Thus more than one submodule may simultaneously win the arbitration in block 203, and move to block 204.

In the case of a multiple win, it is not important which of the interrupts is serviced first because they have equal priority, but in order to prevent both trying to respond together, the carry chain 119 is used. The carry chain 119 signal originates at the module interrupt interface 100 and propagates through the submodule control logic arrangement 15 of each submodule 103,104,105, coupled to the submodule bus 102. The signal from the module interrupt interface 100 to the first submodule is always positive (enable). The submodule control logic arrangement 15 causes the output signal of the carry chain 119 to also be positive if the input of the carry chain 119 is positive and the submodule does not have an interrupt request pending that can be responded to during the current interrupt acknowledge cycle.

The interrupt logic in each submodule passes the input signal of the carry chain 119 on as received during an interrupt acknowledge cycle if an interrupt request is not pending within that submodule, if the level compare does not occur, and/or if the value driven onto the ARB line 122 does not match. The first submodule to have a positive input of the carry chain 119, an interrupt request pending, a level compare that is true, and where the ARB line 122 match what is driven, then that module negates the output of the carry chain to the next submodule. All subsequent submodules see a negative (disable) input of the carry chain 119, so they cannot respond to the current interrupt acknowledge cycle.

The conclusion of the monitoring of the ARB line 122 and the carry chain 119 arbitration is that there is a maximum of one submodule that has won the right to respond to the interrupt acknowledge cycle within the module 5.

That is the submodule where the submodule control logic arrangement 15 has a positive input from the carry chain 119 and a negative output to the carry chain 119.

During the carry chain 119 arbitration between the submodule interrupt request sources, the general arbitration is still taking place on the bus 101, in block 304. By the time that the interrupt arbitration logic 109 is finished with the arbitration on the bus 101, the submodule arbitration is also finished among the submodules, providing a single winning submodule. If the module 5 does not win the bus 101 arbitration, the module interrupt interface 100 and the selected submodule 103 both stop responding to the current interrupt acknowledge cycle.

If the module 5 does win the arbitration, the interrupt arbitration logic 109 activates the VECT line 123. At block 205 the submodule vector number driver 16 responds to the signal on the VECT line 123 if the control logic 15 indicates that the submodule has won the submodule arbitration. The submodule vector number driver 16 provides the submodule vector number on the submodule bus 102. This number is only part of the complete vector number required by the processor. The module multiplexer 110 appends the additionally required module vector bits from the module vector number memory 106 to form the full vector number. At block 305 the complete vector number is deposited onto the bus 101 for the processor. At block 404 the processor successfully receives the vector number from the bus 101, the interrupt acknowledge cycle is considered complete.

The processor uses the vector number to cause an interrupt routine unique to the interrupt request source to be executed. The interrupt routine comprises a series of instructions, these instructions are responsible for servicing the submodule in such a way that the serviced interrupt request is removed from the submodule. As the processor completes each instruction of the interrupt routine at block 401, the processor returns to block 402 and compares the highest interrupt request level on the IRQ lines 115 of the bus 101 with the interrupt masking level as described above, and responds accordingly, either returning to block 401 and continuing with the next instruction of the present interrupt routine or program, or initiating another interrupt acknowledge cycle by providing the arbitration timing on the bus 101 at block 403.

In this way the processor is able to service interrupts arising from multiple submodule interrupt request sources within modules, whilst allowing full use of vectored interrupt methods and inter-module arbitration. When viewed from the bus 101, the arrangement appears to be a conventional module, following the set protocols of the system.

It will be appreciated that alternative embodiments to the one hereinbefore described may be achieved, such as the use of a dedicated bus controller for the bus 101 instead of the processor.

Alternative couplings may be utilised instead of the submodule bus, such as direct wire connections, fibre optic paths or other communication paths. The control messages from the bus 101 may vary according to the system used, as may the arrangement of control messages within the module.

## Claims

1. An interrupt arrangement for use in a module (5) coupled to a bus (101) of a data processing system, the system having an interrupt sequence, wherein the module (5) comprises:
a plurality of submodules (103, 104, 105), each submodule including an interrupt request source (9) a control input (14), and containing priority information about the interrupt request source (9) for determining an order of priority between submodules having active interrupt request sources;
a submodule bus (102) having a plurality of lines (119, 120, 121, 122, 123, 124, 125, 126), and coupled to the control input (14) of each submodule;
an interface (100) for coupling to the bus (101) of the data processing system, and coupled to the submodule bus (102), the interface (100) containing priority information about the arrangement for determining an order of priority between the module (5) and other modules connected to the system bus (101), the interface (100) also including a control means (108) for providing control signals to the control inputs (14) of the submodules (103, 104, 105) via the submodule bus (102) in response to interrupt signals from the system bus (101),
wherein the interface (100) is arranged to combine the priority information (10, 11) of the highest priority submodule with the priority information (106, 107) of the interface (100) for providing complete priority information for establishing an order of priority between modules having active interrupt request sources, thereby allowing the interrupt request sources (9) of the submodules (103, 104, 105) to be serviced by the interrupt sequence of the system bus (101).

2. The arrangement of claim 1 wherein the control means (108) is arranged to control the function of the submodule bus (102).

3. The arrangement of claim 1 or claim 2 wherein each submodule (103, 104, 105) includes memories (10, 11) containing the priority information about the interrupt request source (9) of that submodule.

4. The arrangement of any preceding claim wherein each submodule (103, 104, 105) includes a logic means (14) arranged to receive, interpret and respond to the control signals sent by the control means (108).

5. The arrangement of any preceding claim wherein the interface (100) includes memories (106, 107) containing the priority information about the arrangement.

6. The arrangement of claim 4 wherein a carry chain (119) is coupled to each submodule (103, 104, 105) in series for providing a signal arranged to enable or disable the logic means (14) of the submodules (103, 104, 105) in response to the status of the previous submodule, wherein in the event of a submodule gaining priority, the carry chain (119) is arranged to disable subsequent submodule logic means in order that only one submodule has priority.

7. The arrangement of any of the claims 4 to 6 inclusive wherein the priority information includes arbitration information (10, 107), for allowing arbitration between interrupt request sources (9) otherwise having the same priority.

8. The arrangement of claim 7 wherein each submodule includes a latch (12) for maintaining the interrupt request condition at the commencement of arbitration throughout the period of arbitration, in order to prevent a change in condition during the arbitration.

## Patentansprüche

1. Unterbrechungsanordnung für die Benutzung in einem Modul (5), das an einen Bus (101) eines Datenverarbeitungssystems gekoppelt ist, wobei das System eine Unterbrechungsfolge hat, wobei das Modul (5) umfaßt:
- eine Vielzahl von Teilmodulen (103, 104, 105), wobei jedes Teilmodul eine Unterbrechungsanforderungsquelle (9) mit einem Steuereingang (14) enthält und Prioritätsinformationen über die Unterbrechungsanforderungsquelle (9) zur Bestimmung einer Ordnung der Priorität zwischen Teilmodulen mit aktiven Unterbrechungsanforderungsquellen umfaßt;
- einen Teilmodulbus (102) mit einer Vielzahl von Leitungen (119, 120, 121, 122, 123, 124, 125, 126), der an den Steuereingang (14) jedes Teilmoduls gekoppelt ist;
- eine Schnittstelle (100) zur Kopplung zu dem Bus (101) des Datenverarbeitungssystems, und die zu dem Teilmodulbus (102) gekoppelt ist, wobei die Schnittstelle (100) Prioritätsinformationen über die Anordnung zur Bestimmung einer Ordnung der Priorität zwischen dem Modul (5) und anderen an den Systembus (101) geschalteten Modulen umfaßt, wobei die Schnittstelle (100) auch Steuermittel (108) zur Bereitstellung von Steuersignalen an die Steuereingänge (14) der Teilmodule (103, 104, 105) über den Teilmodulbus (102) in Reaktion auf Unterbrechungssignale von dem Systembus (101) enthält;
wobei die Schnittstelle (100) angeordnet ist, um die Prioritätsinformationen (10, 11) des Teilmoduls mit höchster Priorität mit den Prioritätsinformationen (106, 107) der Schnittstelle (100) zu kombinieren, um vollständige Prioritätsinformationen zur Erzeugung einer Ordnung der Priorität zwischen Modulen mit aktiven Unterbrechungsanforderungsquellen bereitzustellen, um zu gestatten, daß die Unterbrechungsanforderungsquellen (9) der Teilmodule (103, 104, 105) von der Unterbrechungsfolge des Systembusses (101) bedient werden.

2. Anordnung nach Anspruch 1, wobei die Steuermittel (108) angeordnet sind, um die Funktion des Teilmodulbusses (102) zu steuern.

3. Anordnung nach Anspruch 1 oder 2, wobei jedes Teilmodul (103, 104, 105) Speicher (10, 11) enthält, die die Prioritätsinformationen Über die Unterbrechungsanforderungsquelle (9) dieses Teilmoduls umfassen.

4. Anordnung nach einem der vorhergehenden Ansprüche, wobei jedes Teilmodul (103, 104, 105) ein Logikmittel (14) enthält, welches angeordnet ist, un die von den Steuermitteln (108) gesendeten Steuersignale zu empfangen, zu interpretieren und zu beantworten.

5. Anordnung nach einem der vorhergehenden Ansprüche, wobei die Schnittstelle (100) Speicher (106, 107) enthält, die die Prioritätsinformationen über die Anordnung umfassen.

6. Anordnung nach Anspruch 4, wobei eine Trägerkette (119) an jedes Teilmodul (103, 104, 105) in Reihe gekoppelt ist, zur Bereitstellung eines Signals, welches angeordnet ist, um die Logikmittel (14) der Teilmodule (103, 104, 105) in Reaktion auf den Status des vorhergehenden Teilmoduls gültig oder ungültig zu schalten, wobei im Fall eines Teilmodulprioritätsgewinns die Trägerkette (119) angeordnet ist, um die Logikmittel der nachfolgenden Teilmodule ungültig zu schalten, damit nur ein Teilmodul Priorität hat.

7. Anordnung nach einem der Ansprüche 4 bis 6, einschließlich dessen, daß die Prioritätsinformationen Entscheidungsinformationen (10, 107) enthalten, zur Ermöglichung der Entscheidung zwischen Unterbrechungsanforderungsquellen (9), die ansonsten dieselbe Priorität haben.

8. Anordnung nach Anspruch 7, wobei jedes Teilmodul einen Zwischenspeicher (12) enthält, zur Aufrechterhaltung der Unterbrechungsanforderungsbedingung beim Beginn der Entscheidung für die Dauer der Entscheidung, um eine Bedingungsänderung während der Entscheidung zu verhindern.

## Revendications

1. Dispositif d'interruption destiné à être utilisé dans un module (5) couplé à un bus (101) d'un système de traitement de données, le système ayant une séquence d'interruptions, où le module (5) comprend :
une pluralité de sous-modules (103, 104, 105), chaque sous-module comportant une source de demande d'interruption (9) et une entrée de commande (14) et contenant des informations de priorité qui se rapportent à la source de demande d'interruption (9) et servent à déterminer un ordre de priorité entre des sous-modules qui ont des sources de demande d'interruption actives ;
un bus 102 de sous-modules, possédant plusieurs lignes (119, 120, 121, 122, 123, 124, 125, 126), et couplé à l'entrée de commande (14) de chaque sous-module ;
une interface (100) servant au couplage avec le bus (101) du système de traitement de données, et couplée au bus de sous-modules (102), l'interface (100) contenant des informations de priorité qui se rapportent au dispositif et permettent de déterminer un ordre de priorité entre le module (5) et d'autres modules connectés au bus (101) du système, l'interface (100) comportant également un moyen de commande (108) qui sert à fournir des signaux de commande aux entrées de commande (14) des sous-modules (103, 104, 105) via le bus de sous-modules (102) en réponse à des signaux d'interruption venant du bus (101) du système,
où l'interface (100) est conçue pour combiner les informations de priorité (10, 11) du sous-module ayant la priorité la plus élevée avec les informations de priorité (106, 107) de l'interface (100) afin de fournir des informations de priorité complètes permettant d'établir un ordre de priorité entre des modules ayant des sources actives de demande d'interruption, ce qui permet aux sources de demande d'interruption (9) des sous-modules (103, 104, 105) d'être prises en charge par la séquence d'interruptions du bus (101) du système.

2. Dispositif selon la revendication 1, où le moyen de commande (108) est conçu pour commander la fonction du bus (102) de sous-modules.

3. Dispositif selon la revendication 1 ou 2, où chaque sous-module (103, 104, 105) comporte des mémoires (10, 11) contenant les informations de priorité qui se rapportent à la source de demande d'interruption (9) de ce sous-module.

4. Dispositif selon l'une quelconque des revendications précédentes, où chaque module (103, 104, 105) comporte un moyen logique (14) conçu pour recevoir les signaux de commande envoyés par le moyen de commande (108), pour les interpréter et pour y répondre.

5. Dispositif selon l'une quelconque des revendications précédentes, où l'interface (100) comporte des mémoires (106, 107) contenant les informations de priorité se rapportant au dispositif d'interruption.

6. Dispositif selon la revendication 4, où une chaîne de report (119) est couplée à chaque sous-module (103, 104, 105) en série, afin de fournir un signal conçu pour valider ou invalider le moyen logique (14) des sous-modules (103, 104, 105) en réponse à l'état du sous-module précédent, où, dans le cas d'un sous-module ayant emporté la priorité, la chaîne de report (119) est conçue pour invalider les moyens logiques des sous-modules suivants afin que seul un sous-module ait la priorité.

7. Dispositif selon l'une quelconque des revendications 4 à 6 inclusivement où les informations de priorité comportent des informations d'arbitrage (10, 107), afin de permettre l'arbitrage entre des sources de demande d'interruption (9) ayant par ailleurs la même priorité.

8. Dispositif selon la revendication 7, où chaque sous-module comporte un circuit de verrouillage (12) servant à maintenir l'état de demande d'interruption existant au début de l'arbitrage pendant toute la période d'arbitrage, afin d'empêcher un changement d'état pendant l'arbitrage.
